(19) **Europäisches Patentamt**

**European Patent Office**

**Office européen des brevets**

(11) Publication number: **0 045 221**
**B1**

(12) **EUROPEAN PATENT SPECIFICATION**

(45) Date of publication of patent specification: **05.12.84**

(21) Application number: **81303496.4**

(22) Date of filing: **30.07.81**

(51) Int. Cl.³: **H 04 N 9/39**

(54) Demodulator circuit for PAL system color television signals.

(30) Priority: **30.07.80 JP 105464/80**

(43) Date of publication of application:
**03.02.82 Bulletin 82/05**

(45) Publication of the grant of the patent:
**05.12.84 Bulletin 84/49**

(84) Designated Contracting States:
**DE GB NL**

(56) References cited:
**DE-A-2 231 169**
**FR-A-1 593 556**
**FR-A-2 454 737**
**GB-A-1 448 979**
**GB-A-2 054 314**
**US-A-3 715 469**

(73) Proprietor: **Matsushita Electric Industrial Co., Ltd.**
**1006, Oaza Kadoma**
**Kadoma-shi Osaka-fu, 571 (JP)**

(72) Inventor: **Nakase, Yoshimori**
**2-2, Saiwaidori**
**Sakai-shi Osaka-fu (JP)**
Inventor: **Sagishima, Takayuki**
**1-26-17, Furuedai**
**Suita-shi Osaka-fu (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to a demodulator circuit for color television signals of PAL system.

As is generally known, in the PAL system, the demodulating axis for one of the two color difference signals, usually, the R—Y signal, is sent with the phase inverted for each horizontal scanning period (referred to below as 1H). One method of demodulating such a color difference signal at the correct polarity is to change over a switch at a frequency (referred to below as $f_H/2$) which is half of the horizontal frequency (referred to below as $f_H$). In order to drive this switch, a flip-flop dividing the horizontal frequency is used, and a $f_H$ line switching pulse is generated. The flip-flop may be controlled so as to keep the $f_H/2$ line switching signal in the correct phase relationship with the color synchronizing signal included in the transmission line information.

In such a circuit, the PAL switch is continually changing over in order to control the phase of the $f_H/2$ line switching pulse, as mentioned above.

An alternative method of demodulating color difference signals at the correct polarity of a PAL system is disclosed in patent specification GB 1,448,979. This document provides a method which does not control the phase of the $f_H/2$ line switching pulse. Instead the two reference subcarriers each with different polarities which must be supplied to the R—Y and B—Y demodulating circuits are generated by a local subcarrier oscillator.

A first local subcarrier oscillator oscillates in either the +(R—Y) axis or in the —(R—Y) axis, case by case. In order to demodulate B—Y difference chrominance signal, another oscillator or another switching circuit is additionally needed.

The object of this invention is to provide a demodulator circuit of color television signals to demodulate the correct polarity of one of the two color difference signals without controlling the phase of the $f_H/2$ line switching pulse.

The present invention provides a color demodulating apparatus for PAL-type color television signals, said apparatus comprising:

A frequency divider arranged to be supplied with pulses at line frequency for providing a switching pulse train having a frequency of half of the horizontal line frequency;

a first switching circuit supplied with a carrier chrominance signal;

a first phase inverter supplied with said carrier chrominance signal, said first switching circuit having a switch control terminal supplied with the output of said frequency divider, and the output of said switching circuit being connected to one input of a R—Y demodulator used to demodulate color signals extracted from television signals, wherein said first switching circuit alternately feeds said carrier chrominance signal or said carrier chrominance signal with its polarity inverted by said first phase inverter to said demodulator for each horizontal scanning period;

a second phase inverter supplied with a reference subcarrier in phase with said carrier chrominance signal, a second switching circuit arranged to selectively feed either said reference subcarrier or the reference subcarrier with a polarity inverted from that of said reference subcarrier in the R—Y axis, to another input of said R—Y demodulator; and

A control means connected to said second switching circuit, so that the polarity of the reference subcarrier delivered to another input of said R—Y demodulator is identical with the polarity of the carrier chrominance signal delivered to said one input without the need to control the phase of said switching pulse trains.

According to a further development, said control means preferably comprises a third switching means supplied with a burst signal derived from the PAL-type color television signals; a third phase inverter supplied with said burst signal so that said third switching circuit alternately feeds said burst signal and a phase inverted version thereof from said third phase inverter to an output terminal of said third switching means for each horizontal scanning period by said switching pulse train derived from said frequency divider; a phase discriminator detecting said output of said third switching means using a reference subcarrier in the R—Y axis whose phase is different from the average phase of alternating burst signal by 90°; and a control circuit supplied with the output of said phase discriminator, said control circuit controls said second switching means according to the polarity of said output of said phase discriminator.

In this development, the third switching means has a switch control terminal coupled to said switch control terminal of said first switching means, and said switching pulse derived from said frequency divider controls said third switching means together with said first switching means, so that the output of said phase discriminator is either positive or negative in polarity regardless of horizontal line.

According to an alternative development said control means preferably comprises:

a phase discriminator detecting alternating burst signal out of PAL-type color television signals using a reference subcarrier in the R—Y axis whose phase is different from the average phase of said alternative burst signal by 90°;

a further switching means connected to the output of said phase discriminator.

a polarity inverter connected to the output of said phase discriminator, wherein said further switching means alternately switches an output signal of said phase discriminator and a polarity inverted version thereof with said switching pulse train derived from said frequency divider; and

a control circuit supplied with the output of said further switching means, said control circuit controls said second switching means according to the polarity of said output of said further switching means.

In this alternative development, the further switching circuit has a switch control terminal coupled to said switch control terminal of said first switching means, and said switching pulse derived from said frequency divider controls said further switching means together with said first switching means, so that the output derived from said further switching means is either positive or negative in polarity regardless of horizontal line.

In order that the present invention be more readily understood, embodiments thereof will now be described by way of example with reference to the accompanying drawings in which:

Fig. 1 is a block diagram of a color signal demodulating circuit in accordance with the present invention;

Fig. 2 shows a vector diagram and wave diagram explaining the circuit shown in Fig. 1;

Fig. 3 is a block diagram of a further color signal demodulating circuit in accordance with the present invention; and

Fig. 4 shows a vector diagram and wave diagram explaining the circuit shown in Fig. 3.

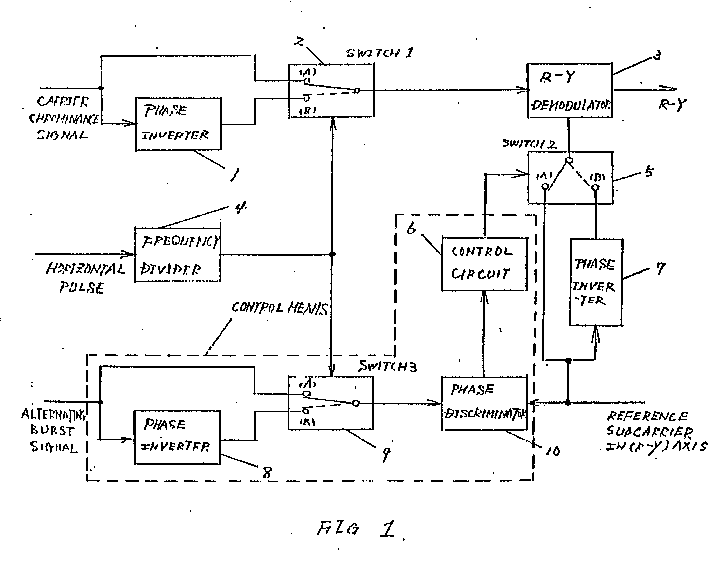

As shown in Fig. 1, the R—Y chrominance carrier color signal passed through a delay line matrix composed of a 1H delay line (not shown in Fig. 1) and difference subtracting circuit (not shown in Fig. 1) is supplied to one input terminal (A) of a first switching circuit 2 and at the same time is supplied to another input terminal (B) through a phase inverter 1. The switch control terminal of the first switching circuit is supplied with a switching pulse having a frequency half that of the horizontal frequency (that is to say $f_H/2$) derived from a frequency divider, which divides the horizontal frequency in two, and the output from the first switching circuit 2 is fed to an R—Y demodulator 3.

On the other hand, the reference subcarrier to demodulate the R—Y signal, whose phase, if the average phase of alternating burst signal is 180°, is 90°, is applied to one input terminal A of a second switching circuit. And at the same time the reference subcarrier is inverted at a phase inverter 7, and the inverted reference subcarrier whose phase is −90° is applied to another input terminal B of the second switching circuit. This second switching circuit 5 is controlled by the switching signal from a control circuit 6 so that the phase of the output of the second switching circuit 5 is either +90° or −90°, and the output of the second switching circuit 5 is applied to the R—Y demodulator 3.

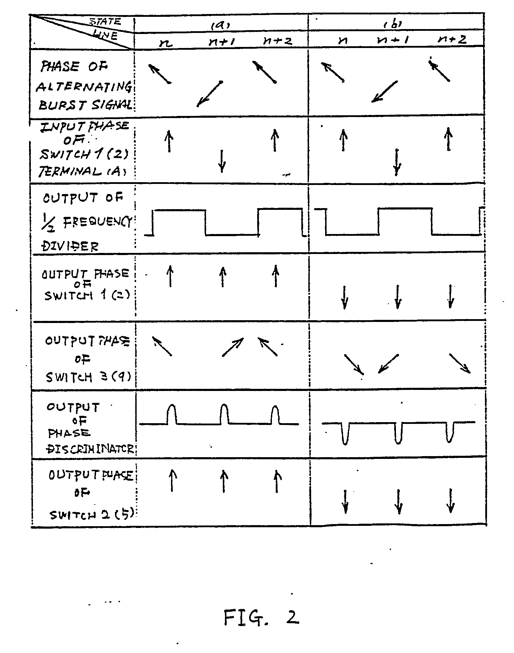

In Fig. 2, assuming that, the phase of PAL system alternating burst signals becomes +135°, −135°, +135°, −135′, ... for the nth line, (n + 1)th line, (n + 2)th line, (n + 3)th line, ..., respectively, the phase of the input signal of the input terminal A of the first switching circuit 2 becomes +90°, −90°, +90°, −90° ...

and that of the another input terminal B becomes −90°, +90°, −90°, +90°.

There are two casses, namely: the output signal of the frequency divider 4, that is the $f_H/2$ switching signal, becomes high logic level (referred to as "H" below), low logic level (referred to as "L" below), "H" ... in accordance with nth line, (n + 1)th line, (n + 2)th line, ... and the $f_H/2$ switching signal becomes "L", "H", "L". We call the former the state "(a)" and the latter the state "(b)". Assuming that, when the $f_H$ switching signal is "H", the first switching circuit 2 is switched to the input terminal A and when it is "L", the first switching circuit 2 is switched to the input terminal B, then in state (a), the phase of the output signal from the first switching circuit is 90° at any 1H period, and in state (b), the output is conversely −90° at any 1H period.

The phase of the alternating burst signal applied to the input terminal A of the third switching circuit 9 is alternately +135° and −135°, and the phase of the burst signal through a phase inverter 8 to the input terminal B is alternately −45° and +45°, and $f_H/2$ switching pulse is applied to the switch control terminal of the third switching circuit.

Assuming that, when the $f_H/2$ switching signal is "H", the third switching circuit 9 is switched to the input terminal A, and when it is "L", the third switching circuit 9 is switched to the input terminal B. Then in state (a), the phase of the burst signal at the output terminal of the third switching circuit 9 is alternately +135° and +45° and in stage (b), it is alternately −45° and −135°.

The burst detecting output of a phase discrimination circuit 10 which performs homodyne detecting of the burst signal using the reference subcarrier whose phase is +90° takes on a positive polarity in state (a), and take on a negative polarity in state (b). By this difference, a control circuit 6 controls the connection of the switching circuit 5 so that the output of R—Y demodulator 3 can obtain an R—Y color difference signal having correct polarity under both states (a) and (b). That is to say, in state (a) the control circuit 6 switches the second switch 5 to the input terminal A, and in state (b) the control circuit 6 switches it to the input terminal B, so that the phase of R—Y reference subcarrier applied to the R—Y demodulator 3 becomes as shown in Fig. 2.

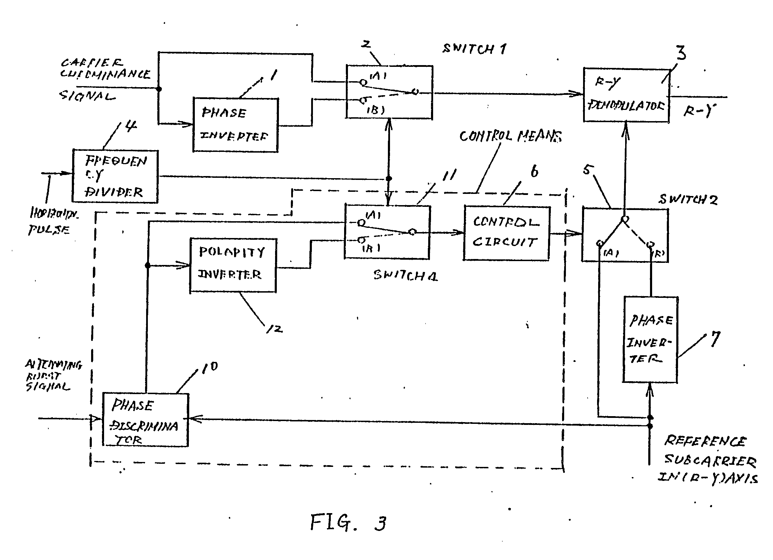

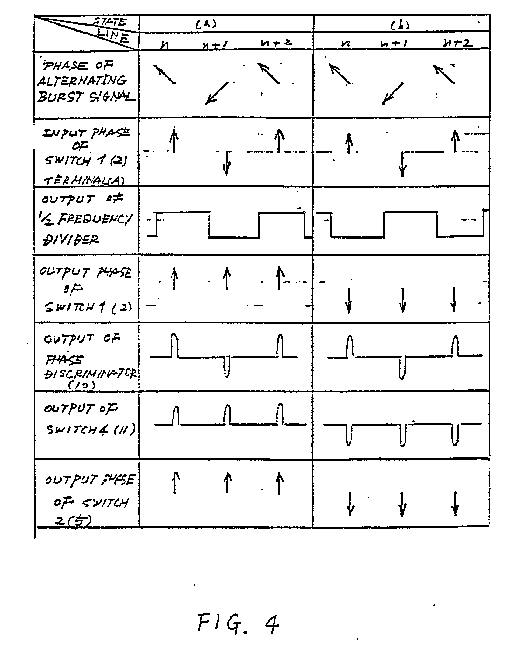

Fig. 3 shows another embodiment of this invention and Fig. 4 shows a vector and wave diagram of the embodiment.

Identical parts to those shown in Fig. 1 and Fig. 2 bear the same reference numerals and their explanations are therefore omitted. This embodiment may be characterized as follows:

In the state (a) and state (b) mentioned above, this embodiment obtains different burst detecting outputs in polarity. The alternating burst signal is detected synchronously at the phase discriminator 10 using the reference subcarrier whose phase is +90°, and the burst detecting output signal is directly fed to the input terminal A of a fourth switching circuit 11 and a signal with the polarity inverted the output signal is fed to another input terminal B. And $f_H/2$ switching pulse is supplied to the switch control terminal of the fourth switching circuit. Assuming that, when the $f_H/2$ switching signal is "H", the fourth switching circuit 11 selects the input terminal A, and when it is "L", the fourth switching circuit 11 selects the input terminal B, then in state (a), the polarity of the output signal from the fourth switching circuit 11 is positive regardless of horizontal line, and in state (b), inversely, the polarity is negative regardless of horizontal line as shown in Fig. 4.

As stated above, this invention allows the realization of a new demodulator circuit for color television signals of PAL system, in which the correct polarity (R—Y) signal can be obtained with just the generation of the $f_H/2$ line switching signal, for which phase control is not exercised.

## Claims

1. A color demodulating apparatus for PAL-type color television signals, said apparatus comprising:

a frequency divider (4) arranged to be supplied with pulses at line frequency for providing a switching pulse train having a frequency of half of the horizontal line frequency;

a first switching circuit (2) supplied with a carrier chrominance signal;

a first phase inverter (1) supplied with said carrier chrominance signal, and first switching circuit having a switch control terminal supplied with the output of said frequency divider (4), and the output of said switching circuit being connected to one input of a R—Y demodulator (3) used to demodulate color signals extracted from television signals, wherein said first switching circuit (2) alternately feeds said carrier chrominance signal or said carrier chrominance signal with its polarity inverted by said first phase inverter (1) to said demodulator (3) for each horizontal scanning period;

a second phase inverter (7) supplied with a reference subcarrier in phase with said carrier chrominance signal, a second switching circuit (5) arranged to selectively feed either said reference subcarrier or the reference subcarrier with polarity inverted from that of said reference subcarrier in the R—Y axis, to another input of said R—Y demodulator; and

a control means connected to said second switching circuit, so that the polarity of the reference subcarrier delivered to said another input of said R—Y demodulator is identical with the polarity of the carrier chrominance signal delivered to said one input without the need to control the phase of said switching pulse trains.

2. Apparatus according to claim 1, wherein said control means comprises:

a third switching circuit (9) supplied with burst signals extracted from the PAL type color television signals;

a third phase inverter (8) supplied with said burst signals, so that said third switching circuit (9) alternatively feeds said burst signal and a phase inverted version thereof from said third phase inverter (8) to an output terminal of said third switching circuit (9) for each horizontal scanning period by said switching pulse train derived from said frequency divider (4);

a phase discriminator (10) for detecting said output of said third switching circuit (9) using said reference subcarrier with a phase which is different from the average phase of alternating burst signal by 90°; and

a control circuit (6) supplied with the output of said phase discriminator (10), said control ciruit (6) controls said second switching circuit (5) according to the polarity of said output of said phase discriminator (10).

3. Apparatus according to claim 1, wherein said control means comprises:

a phase discriminator (10) for detecting the alternating burst signal extracted from the television signals using said reference subcarrier with a phase which is different from the average phase of said alternating burst signal by 90°;

a further switching circuit (11) connected to the output of said phase discriminator (10);

a polarity inverter (12) connected to the output of said phase discriminator (10) wherein said further switching circuit (11) alternatively switches an output signal of said phase discriminator (10) and a polarity inverted version thereof with said switching pulse train derived from said frequency divider (4); and

a control circuit (6) supplied with the output of said fourth switching circuit, said control circuit controls said second switching circuit according to the polarity of said output of said fourth switching circuit.

4. Apparatus according to claim 2, wherein the third switching circuit (9) has its switch control terminal coupled to said switch control terminal of said first switching circuit (2), and said switching pulse derived from said frequency divider (4) controls said third switching circuit (9) together with said first switching circuit (2), so that the output of said phase discriminator (3) is either positive or negative in polarity of horizontal line.

5. Apparatus according to claim 3, wherein the further switching circuit (11) has its switch control terminal coupled to said switch control terminal of said first switching circuit (2), and said switching pulse derived from said frequency divider (4) controls said further switching circuit (11) together with said first switching circuit (2), so that the output derived from said further switching circuit (11) is either positive or negative in polarity regardless of horizontal line.

**Patentansprüche**

1. Farbdemodulationsgerät für PAL-Art-Farbfernsehsignale, wobei das Gerät aufweist:

eine Frequenzteiler (4), der angeordnet ist, um mit Impulsen mit Zeilenfrequenz gespeist zu werden, zum Abgeben einer Schaltimpulsfolge mit einer Frequenz der Hälfte der Horizontalzeilenfrequenz;

einen ersten Schaltkreis (2), dem ein Trägerfarbsignal zugeführt wird;

einen ersten Phaseninverter (1), dem das Trägerfarbsignal zugeführt wird, und wobei der erste Schaltkreis einen Schaltsteueranschluß aufweist, dem das Ausgangssignal des Frequenzteilers (4) zugeführt wird und wobei der Ausgang des Schaltkreises mit einem Eingang eines R—Y-Demodulators (3) verbunden ist, der zum Demodulieren von aus den Fernsehsignalen extrahierten Farbsignalen verwendet wird, wobei der ersten Schaltkreis (2) abwechselnd das Trägerfarbsignal oder das in seiner Polarität durch den ersten Phaseninverter (1) invertierte Trägerfarbsignal dem Demodulator (3) für jede Horizontalabtastperiode zuführt;

einen zweiten Phaseninverter (7), dem ein Bezugshilfsträger in Phase mit dem Trägerfarbsignal zugeführt wird, wobei ein zweiter Schaltkreis (5) angeordnet ist, um entweder den Bezugshilfsträger oder den in seiner Polarität von demjenigen des Bezugshilfsträger in der R—Y-Achse invertierten Bezugshilfsträger an einen weiteren Eingang des R—Y-Demodulators zuführt und

eine Steuervorrichtung, die mit dem zweiten Schaltkreis verbunden ist, derart, daß die Polarität des an den anderen Eingang des R—Y-Demodulators gelieferten Bezugshilfsträgers identisch ist mit der Polarität des an den einen Eingang gelieferten Trägerfarbsignals, ohne die Notwendigkeit, die Phase der Schaltimpulsfolgen zu steuern.

2. Gerät nach Anspruch 1, wobei die Steuervorrichtung aufweist:

einen dritten Schaltkreis (9), dem aus den PAL-Art-Farbfernsehsignalen extrahierte Burstsignale zugeführt werden;

einen dritten Phaseninverter (8), dem die Burstsignale zugeführt werden, so daß der dritte Schaltkreis (9) alternativ das Burstsignal und eine phaseninvertierte Version desselben von dem dritten Phaseninverter (8) einem Ausgangsanschluß des dritten Schaltkreises (9) durch die vom Frequenzteiler (4) abgelietete Schaltimpulsfolge für jede Horizontal-Abtastperiode zuführt;

einen Phasendiskriminator (10) zum Detektieren des Ausgangssignals des dritten Schaltkreises (9) unter Verwendung des Bezugshilfsträgers mit einer Phase, die um 90° von der mittleren Phase des alternierenden Burstsignals verschieden ist; und

eine Steuerschaltung (6), der das Ausgangssignal des Phasendiskriminators (10) zugeführt wird, wobei die Steuerschaltung (6) den zweiten Schaltkreis (5) entsprechend der Polarität des Ausgangssignals des Phasendiskriminators (10) steuert.

3. Gerät nach Anspruch 1, wobei die Steuervorrichtung aufweist:

einen Phasendiskriminator (10) zum Detektieren des aus den Fernsehsignalen extrahierten alternierenden Burstsignals unter Verwendung eines Bezugshilfsträgers mit einer Phase, die um 90° von der mittleren Phase des alternierenden Burstsignals verschieden ist;

einen weiteren Schaltkreis (11), der mit dem Ausgang des Phasendiskriminators (10) verbunden ist;

einen Polaritätsinverter (12), der mit dem Ausgang des Phasendiskriminators (10) verbunden ist, wobei der weitere Schaltkreis (11) alternativ ein Ausgangssignal des Phasendiskriminators (10) und eine in der Polarität invertierte Version desselben mit der von dem Frequenzteiler (4) abgeleiteten Schaltimpulsfolge schaltet, und

eine Steuerschaltung (6), der das Ausgangssignal des vierten Schaltkreises zuggführt wird, wobei die Steuerschaltung den zweiten Schaltkreis gemäß der Polarität des Ausgangssignals des vierten Schaltkreises steuert.

4. Gerät nach Anspruch 2, wobei der dritte Schaltkreis (9) seinen Schaltsteueranschluß mit dem Schaltsteueranschluß des ersten Schaltkreises (2) gekoppelt hat und der von dem Frequenzteiler (4) abgeleitete Schaltimpuls den dritten Schaltkreis (9) zusammen mit dem ersten Schaltkreis (2) steuert, so daß das Ausgangssignal des Phasendiskriminators (3) entweder positiv oder negativ in der Polarität der Horizontalzeile ist.

5. Gerät nach Anspruch 3, wobei der weitere Schaltkreis (11) seinen Schaltsteueranschluß mit dem Schaltsteueranschluß des ersten Schaltkreises (2) gekoppelt hat und der von dem Frequenzteiler (4) abgeleitete Schaltimpuls den weiteren Schaltkreis (11) zusammen mit dem ersten Shaltkreis (2) steuert, so daß das vom weiteren Schaltkreis (11) abgeleitete Ausgangssignal entweder positiv oder negativ in der Polarität ohne Berücksichtigung der Horizontale ist.

**Revendications**

1. Appareil de démodulation de couleur pour signaux de télévision en couleur du type PAL, ledit appareil comprenant:

un diviseur de fréquence (4) conçu pour recevoir des impulsions à la fréquence de ligne afin de produire un train d'impulsions de commutation dont la féquence vaut la moitié de la fréquence de ligne horizontale;

un premier circuit de commutation (2) recevant un signal de porteuse de chrominance;

un premier inverseur de phase (1) recevant ledit signal de porteuse de chrominance, le premier circuit de commutation possédant une borne de commande de commutation qui reçoit le signal de sortie dudit diviseur de fréquence (4), et la sortie dudit circuit de commutation étant connectée à une entrée d'un démodulateur R—Y (3) utilisé pour démoduler des signaux de couleur extraits de signaux de télévision, où ledit premier circuit de commutation (2) délivre alternativement ledit signal de porteuse de chrominance ou ledit signal de porteuse de chrominance à polarité inversée par ledit premier inverseur de phase (1) audit démodulateur (3) pour chaque période de balayage horizontale;

un deuxième inverseur de phase (7) recevant une sous-porteuse de référence qui est en phase avec ledit signal de porteuse de chrominance, un deuxième circuit de commutation (5) étant conçu pour délivrer sélectivement ladite sous-porteuse de référence ou la sous-porteuse de référence à polarité inversée par rapport à celle de ladite sous-porteuse de référence suivant l'axe R—Y à une autre entrée dudit démodulateur R—Y; et

un moyen de commande connecté audit deuxième circuit de commutation de façon que la polarité de la sous-porteuse de référence délivrée à ladite autre entrée dudit démodulateur R—Y soit identique à la polarité du signal de porteuse de chrominance délivré à ladite première entrée sans qu'uil soit besoin de commander la phase desdits trains d'impulsions de commutation.

2. Appareil selon la revendication 1, où ledit moyen de commande comprend:

un troisième circuit de commutation (9) recevant des signaux de salve extraits des signaux de télévision en couleur du type PAL;

un troisième inverseur de phase (8) recevant lesdits signaux de salve, de façon que ledit troisième circuit de commutation (9) délivre alternativement ledit signal de salve et une version inversée en phase de celui-ci dudit troisième inverseur de phase (8) à une borne de sortie dudit troisième circuit de commutation (9) pour chaque période de balayage horizontal par ledit train d'impulsions de commutation venant dudit diviseur de fréquence (4);

un discriminateur de phase (10) servant à détecteur ledit signal de sortie dudit troisième circuit de commutation (9) à l'aide de ladite sous-porteuse de référence avec une phase qui diffère de 90° de la phase moyenne du signal de salve alterné; et

un circuit de commande (6) recevant le signal de sortie dudit discriminateur de phase (10), ledit circuit de commande (6) commandant ledit deuxième circuit de commutation (5) en fonction de la polarité dudit signal de sortie dudit discrminateur de phase (10).

3. Appareil selon la revendication 1, où ledit moyen de commande comprend:

un discriminateur de phase (10) servant à détecter le signal de salve alterné extrait des signaux de télévision à l'aide de ladite sous-porteuse de référence avec une phase qui diffère de 90° de la phase moyenne dudit signal de salve alterné;

un circuit de commutation supplémentaire (11) connecté à la sortie dudit discriminateur de phase (10);

un inverseur de polarité (12) connecté à la sortie dudit discriminateur de phase (10), où ledit circuit de commutation supplémentaire (11) commute alternativement un signal de sortie dudit discriminateur de phase (10) et une version inversée en polarité de celui-ci avec ledit train d'impulsions de commutation venant dudit diviseur de fréquence (4); et

un circuit de commande (6) recevant le signal de sortie dudit quatrième de circuit de commutation, ledit circuit de commande commandant ledit deuxième circuit de commutation en fonction de la polarité dudit signal de sortie dudit quatrième circuit de commutation.

4. Appareil selon la revendication 2, où la borne de commande de commutation du troisième circuit de commutation (9) est couplée à ladite borne de commande de commutation dudit premier circuit de commutation (2), et ladite impulsion de commutation venant dudit diviseur de fréquence (4) commande ledit troisième circuit de commutation (9) en même temps que ledit premier circuit de commutation (2), si bien que le signal de sortie dudit discriminateur de phase (3) est positif ou négatif en polarité de ligne horizontale.

5. Appareil selon la revendication 3, où la borne de commande de commutation du circuit de commutation supplémentaire (11) est couplée à ladite borne de commande de commutation dudit premier circuit de commutation (2), et ladite impulsion de commutation venant dudit diviseur de fréquence (4) commande ledit circuit de commutation supplémentaire (11) en même temps que ledit premier circuit de commutation (2), si bien que le signal de sortie venant dudit circuit de commutation supplémentaire (11) est positif ou négatif en polarité indépendamment de la ligne horizontale.

FIG 1.

**0 045 221**

| STATE / LINE | (a) | | | (b) | | |
|---|---|---|---|---|---|---|
| | $n$ | $n+1$ | $n+2$ | $n$ | $n+1$ | $n+2$ |
| PHASE OF ALTERNATING BURST SIGNAL | | | | | | |
| INPUT PHASE OF SWITCH 1 (2) TERMINAL (A) | | | | | | |
| OUTPUT OF ½ FREQUENCY DIVIDER | | | | | | |
| OUTPUT PHASE OF SWITCH 1 (2) | | | | | | |
| OUTPUT PHASE OF SWITCH 3 (4) | | | | | | |
| OUTPUT OF PHASE DISCRIMINATOR | | | | | | |
| OUTPUT PHASE OF SWITCH 2 (5) | | | | | | |

FIG. 2

2

FIG. 3

| STATE / LINE | (A) | | | (b) | | |
|---|---|---|---|---|---|---|
| | n | n+1 | n+2 | n | n+1 | n+2 |
| PHASE OF ALTERNATING BURST SIGNAL | | | | | | |
| INPUT PHASE OF SWITCH 1 (2) TERMINAL (A) | | | | | | |
| OUTPUT OF ½ FREQUENCY DIVIDER | | | | | | |
| OUTPUT PHASE OF SWITCH 1 (2) | | | | | | |
| OUTPUT OF PHASE DISCRIMINATOR (10) | | | | | | |
| OUTPUT OF SWITCH 4 (11) | | | | | | |
| OUTPUT PHASE OF SWITCH 2 (5) | | | | | | |

FIG. 4